# EUROPÄISCHE PATENTANMELDUNG

(11) **EP 0 900 690 A1**
(43) Veröffentlichungstag der Anmeldung: **10.03.1999**
(21) Anmeldenummer: 98106658.2
(22) Anmeldetag: 11.04.1998
(51) Int. Cl.: B60N 2/48

(54) **Kopfstütze**

(30) Priorität: 06.09.1997 DE 29716065 U
(71) Anmelder: R. SCHMIDT GMBH, 57368 Lennestadt (DE)
(72) Erfinder: Schmidt, Reinhard, 57386 Lennestadt (DE)
(74) Vertreter: Köchling, Conrad-Joachim

(57) **Zusammenfassung**

Um eine Kopfstütze für Kraftfahrzeuge, bestehend aus einem formstabilen Gehäuseteil, das Raststangen oder dergleichen haltert, mittels derer die Kopfstütze an der Rücklehne eines Sitzes oder an der Hutablage hinter den Rücksitzen insbesondere höhenverstellbar fixierbar ist, wobei ferner die Kopfstütze mit Schaumstoff gepolstert und gegebenenfalls mit einem Bezug über der Polsterung versehen ist und die rückwärtige Fläche des Gehäuseteiles mit einer Abdeckkappe aus Kunststoff verkleidet ist, zu schaffen, die bei kostengünstiger Fertigung eine Splitterbildung der hinteren Abdeckkappe vermeidet, sofern Stoßenergie auf diese Abdeckkappe einwirkt, und bei der die Geräuschbildung durch Resonanzen oder dergleichen vermindert ist, wird vorgeschlagen, daß das Gehäuseteil (2) aus Schaumstoff besteht und die Halterungen (4) für Rast- oder Stützstangen (3) in das Schaumstoffmaterial des Gehäuses (2) eingeformt sind.

## Beschreibung

Die Erfindung betrifft eine Kopfstütze für Kraftfahrzeuge, bestehend aus einem formstabilen Gehäuseteil, das Raststangen oder dergleichen haltert, mittels derer die Kopfstütze an der Rücklehne eines Sitzes oder an der Hutablage hinter den Rücksitzen insbesondere höhenverstellbar fixierbar ist, wobei ferner die Kopfstütze mit Schaumstoff gepolstert und gegebenenfalls mit einem Bezug über der Polsterung versehen ist und die rückwärtige Fläche des Gehäuseteiles mit einer Abdeckkappe aus Kunststoff verkleidet ist.

Im Stand der Technik sind Kopfstützen dieser Art bekannt. Dabei besteht das Gehäuseteil aus einem formstabilen hohlen Kunststoffteil, welches vorzugsweise aus zwei mit ihren Mündungen zueinander gewandten Halbschalen zusammengefügt ist. Das Gehäuseteil haltert die Raststangen oder Stützstangen, mittels derer die Kopfstützen an der Rücklehne eines Sitzes oder dergleichen befestigbar sind. Dabei ist das Gehäuseteil vorderseitig, also auf der dem Kopf zugewandten Seite, mit Schaumstoff gepolstert und mit einem Bezug über der Polsterung versehen. Die rückwärtige Fläche des Gehäuseteiles ist mit einer Abdeckkappe verkleidet.

Eine solche Ausbildung hat sich als vorteilhaft bewährt. Allerdings ist eine solche Ausbildung noch relativ kostenaufwendig, wobei zudem durch die hinterseitige Anordnung der Abdeckkappe die Gefahr besteht, daß diese Abdeckkappe, sofern der Kopf einer hinten sitzenden Person auf die vor ihm befindliche Rückseite der Kopfstütze prallt, splittert. Zudem wird durch den Hohlkörper (das Kunststoffgehäuseteil) eine Geräuschbildung erzeugt, da dieses Gehäuseteil quasi einen Resonanzkörper darstellt.

Ausgehend von diesem Stand der Technik liegt der Erfindung die Aufgabe zugrunde, eine Kopfstütze gattungsgemäßer Art zu schaffen, die bei kostengünstiger Fertigung eine Splitterbildung der hinteren Abdeckkappe vermeidet, sofern Stoßenergie auf diese Abdeckkappe einwirkt und bei der die Geräuschbildung durch Resonanzen oder dergleichen vermindert ist.

Zur Lösung dieser Aufgabe wird vorgeschlagen, daß das Gehäuseteil aus Schaumstoff besteht und die Halterungen für Rast- oder Stützstangen in das Schaumstoffmaterial des Gehäuses eingeformt sind.

Dadurch, daß das Gehäuseteil vollständig aus Schaumstoff besteht, ist eine Geräuschbildung und Resonanzbildung weitestgehend ausgeschlossen. Zudem ist durch den Schaumstoffkörper erreicht, daß Stoßenergie, beispielsweise durch einen auf die Schaumstoffausbildung aufprallenden Kopf, ausgezeichnet abgebaut wird, so daß die Verletzungsgefahr gemindert ist. Zudem ist erreicht, daß die hinterseitig aufgebrachte Abdeckkappe ebenfalls durch den Schaumstoff gefedert ist, so daß auch hier Schlagenergie oder Stoßenergie abgebaut werden kann. Halterungen für Rast- oder Stützstangen sind in das Schaumstoffmaterial des Gehäuses eingeformt, wobei die entsprechenden Elemente beispielsweise von gekapselten Funktionseinheiten umgeben sein können, die in das Schaumstoffmaterial eingebettet sind.

Besonders bevorzugt ist vorgesehen, daß die Abdeckkappe mit ihrer Innenfläche mit dem Schaumstoff klebend verbunden ist.

Die klebende Verbindung zwischen Abdeckkappe und Schaumstoff kann in statu nascendi des Schaumstoffes erfolgen, so daß die Klebkraft des Schaumstoffes selbst als Klebverbindungsmittel benutzt werden kann. Durch die Klebverbindung zwischen Abdeckkappe und dem Gehäuseteil aus Schaumstoff wird erreicht, daß im Falle einer Schlageinwirkung auf die Abdeckkappe diese nicht splittert, sondern der Splittergefahr entgegengewirkt wird. Dies wird insbesondere durch eine flächige Verklebung der Teile miteinander erreicht. Zudem wird auch eine Geräuschbildung im Bereich der Abdeckkappe selbst gemindert oder unterbunden, da Geräusche, die beispielsweise durch Klopfen auf die Abdeckkappe erzeugt werden, durch das dahinter befindliche und mit der Abdeckkappe klebverbundene Schaummaterial gedämmt werden. Hinzu kommt, daß die Abdeckkappe stabilisierend für das aus Schaumstoff bestehende Gehäuseteil wirkt, so daß im Ergebnis eine äußerst stabile Kopfstütze erzeugt ist.

Desweiteren ist bevorzugt vorgesehen, daß der nicht von der Abdeckkappe abgedeckte Bereich des Gehäuseteiles mit Bezugsstoff umhüllt oder von Bezugsstoff abgedeckt ist, der insbesondere mit dem Schaumstoff klebverbunden ist.

Auch das Bezugsmaterial kann mit dem Schaumstoff in statu nascendi verbunden werden, so daß zwischen diesen Teilen eine Klebverbindung erzeugt wird, die vollflächig ist, wobei auch der Bezugsstoff selbst noch stabilisierend auf das Schaummaterial wird, so daß in Ergänzung zur hinteren Abdeckkappe in sich eine gekapselte Kopfstütze geschaffen wird, die äußerst stabil ist.

Bevorzugt ist dabei vorgesehen, daß der nicht von der Abdeckkappe abgedeckte Bereich des aus Schaumstoff bestehenden Gehäuseteiles von Bezugsstoff abgedeckt ist, wobei der Rand des Bezugsstoffes vom Rand der Abdeckkappe übergriffen ist.

Auf diese Weise wird die Randkante des Bezugsstoffes in einfacher Weise abgedeckt, ohne daß es dazu zusätzlicher Maßnahmen bedürfte.

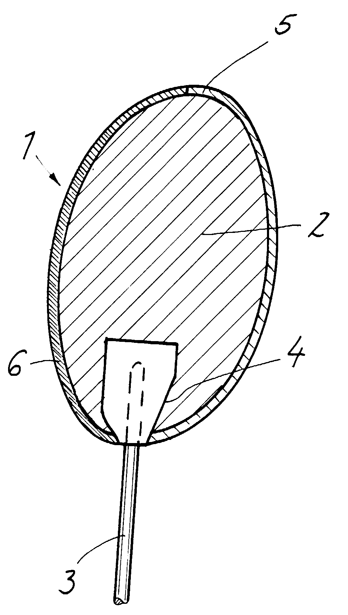

Ein Ausführungsbeispiel der Erfindung ist in der Zeichnung dargestellt und im folgenden näher beschrieben.
Die einzige Zeichnungsfigur zeigt eine Kopfstütze im Querschnitt gesehen.

In der Zeichnung ist eine Kopfstütze 1 für Kraftfahrzeuge gezeigt.
Sie besteht aus einem formstabilen Gehäuseteil 2, welches Raststangen 3 oder Stützstangen haltert, mittels derer die Kopfstütze 1 an der Rückenlehne eines Sitzes oder an der Hutablage hinter den Rücksitzen, vorzugsweise höhenverstellbar, fixiert ist.

Das Gehäuseteil 2 besteht vollständig aus Schaumstoff, beispielsweise PUR-Schaum oder dergleichen Schaummaterial ausreichender Festigkeit und Konsistenz.

Die Halterungen 4 für die Rast- oder Stützstangen 3 sind in das Schaumstoffmaterial des Gehäuses 2 eingeformt. Die Kapselung dieser Halterungen 4 ist mit dem Schaumstoffmaterial (2) klebend verbunden, wobei die Klebkraft des Schaumstoffmaterials 2 selbst ausgenutzt wird.

Auf der in Gebrauchslage rückwärtigen Seite der Kopfstütze 1 ist eine Abdeckkappe 5 aus Kunststoff aufgebracht, die mit ihrer Innenfläche mit dem Schaumstoff des Gehäuseteils 2 klebend verbunden ist.

Der nicht von der Abdeckkappe 5 abgedeckte Bereich des Gehäuseteils 2 (also in der Gebrauchslage die Vorderseite des Gehäuseteils 2) ist mit Bezugsstoff 6 umhüllt oder vom Bezugsstoff 6 abgedeckt, wobei auch der Bezugsstoff 6 mit dem Schaumstoffmaterial des Gehäuseteils 2 klebverbunden ist.

Der Rand des Bezugsstoffes 6 kann sich bis unter den Rand der Abdeckkappe 5 erstrecken, so daß der Rand des Bezugsstoffes 6 von der Abdeckkappe 5 übergriffen und abgedeckt ist.

Eine solche Kopfstütze ist äußerst einfach zu fertigen, wobei in die Form zur Formung des Gehäuseteils 2 zunächst der Bezugsstoff 6 eingelegt werden kann und dann bei geschlossener Form das Schaumstoffmaterial eingebracht werden kann, wobei in statu nascendi eine Klebverbindung und Formung des Gehäuseteils 2 erfolgt. Dabei sind auch die Halterungen 4 in die entsprechende Form mit eingelegt, so daß diese gleichzeitig mit von Schaummaterial umhüllt werden. Anschließend kann nach Öffnung des Werkzeuges die Abdeckkappe 5 aufgelegt werden, solange der Schaum noch nicht abgebunden hat, so daß die Abdeckkappe nicht nur gehalten ist, sondern von dem Schaumstoffmaterial (2) klebend gehalten ist. Es wird auf diese Weise eine äußerst kostengünstige Kopfstütze zur Verfügung gestellt, wobei die Abdeckkappe 5 nicht zur Splitterbildung neigt, die Geräuschbildung der Kopfstütze 1 insgesamt vermindert ist und die Schlag- oder Stoßenergie von dem Schaummaterial des Gehäuseteils 2 aufgenommen werden kann. Dabei wirkt die Abdeckkappe stabilisierend für das Schaummaterial des Gehäuseteils 2, ebenso wie auch der Bezugsstoff 6 in Ergänzung eine stabilisierende Wirkung ausübt.

Die Erfindung ist nicht auf das Ausführungsbeispiel beschränkt, sondern im Rahmen der Offenbarung vielfach variabel.

## Patentansprüche

1. Kopfstütze für Kraftfahrzeuge, bestehend aus einem formstabilen Gehäuseteil, das Raststangen oder dergleichen haltert, mittels derer die Kopfstütze an der Rücklehne eines Sitzes oder an der Hutablage hinter den Rücksitzen insbesondere höhenverstellbar fixierbar ist, wobei ferner die Kopfstütze mit Schaumstoff gepolstert und gegebenenfalls mit einem Bezug über der Polsterung versehen ist und die rückwärtige Fläche des Gehäuseteiles mit einer Abdeckkappe aus Kunststoff verkleidet ist, **dadurch gekennzeichnet**, daß das Gehäuseteil (2) aus Schaumstoff besteht und die Halterungen (4) für Rast- oder Stützstangen (3) in das Schaumstoffmaterial des Gehäuses (2) eingeformt sind.

2. Kopfstütze nach Anspruch 1, **dadurch gekennzeichnet**, daß die Abdeckkappe (5) mit ihrer Innenfläche mit dem Schaumstoff klebend verbunden ist.

3. Kopfstütze nach Anspruch 1 oder 2, **dadurch gekennzeichnet**, daß der nicht von der Abdeckkappe (5) abgedeckte Bereich des Gehäuseteiles (2) mit Bezugsstoff (6) umhüllt oder von Bezugsstoff (6) abgedeckt ist, der insbesondere mit dem Schaumstoff klebverbunden ist.

4. Kopfstütze nach einem der Ansprüche 1 bis 3, **dadurch gekennzeichnet**, daß der nicht von der Abdeckkappe (5) abgedeckte Bereich des aus Schaumstoff bestehenden Gehäuseteiles (2) von Bezugsstoff (6) abgedeckt ist, wobei der Rand des Bezugsstoffes (6) vom Rand der Abdeckkappe (5) übergriffen ist.
